# FASCICULE DE BREVET EUROPEEN

(11) **EP 0 483 201 B1**
(45) Date de publication et mention de la délivrance du brevet: **13.12.1995**
(21) Numéro de dépôt: 90910752.6
(22) Date de dépôt: 10.07.1990
(51) Int. Cl.: B01D 53/56, B01J 29/14

(54) **Traitement d'effluents gazeux contenant des NOx et de l'oxygène avec des compositions catalytiques à base de zéolites Y échangés au Cu**
Behandlung von NOx und Sauerstoffhaltigen Abgasen mit einer katalytischen Zusammensetzung auf Basis von Zeolith Y, die mit Cu ausgetauscht sind
Treatment of NOx and Oxygen containing gaseous effluents with catalytical compositions based on Cu exchanged Y Zeolites

(30) Priorité: 12.07.1989 FR 8909402
(43) Date de publication de la demande: 06.05.1992
(73) Titulaire: GRANDE PAROISSE S.A., F-92800 Puteaux (FR)
(72) Inventeur: DESCAT, Gilles, F-44600 S.-Nazaire (FR); HAMON, Christian, F-44600 S.-Nazaire (FR)
(74) Mandataire: Rieux, Michel
(86) Numéro de dépôt international: FR9000519
(87) Numéro de publication internationale: WO9100773

(56) Documents cités:
- EP-A- 0 199 169
- EP-A- 0 286 507
- EP-A- 0 326 667
- EP-A- 0 393 905
- DE-A- 3 802 871
- FR-A- 1 523 017
- US-A- 3 929 621
- US-A- 4 052 337
- Chemical Abstracts, vol. 91, 1979 (Columbus, Ohio, US) S. Kasaoka et al.:" Relations between low temperature reduction of nitrogen oxides with ammonia and adsorbtion site of ammonia over copper-exchanged Y-type zeolite catalyst", see page 298, abstract no.128126s, & Kankyo Gijutsu 1979, 8(4), 392-8
- CIT, vol.55,no.2, 1983, Verlag Chemie GmbH (Weinheim, DE) E. Häfele et al.:" Versuche zur Konvertierung von Wasserglas an Zeolith- Katalysatoren ", pp. 148-149

## Description

La présente invention concerne un procédé d'épuration d'effluents gazeux oxygénés contenant des oxydes d'azote, à l'aide de compositions catalytiques à base de zéolithe Y.

Parmi ces procédés on connait en particulier un procédé décrit dans le brevet français 2 568 789 qui propose un procédé de réduction-dé-nitration par l'ammoniac de gaz résiduaires en présence d'une zéolithe du type à substitution par l'hydrogène et/ou le fer à une vitesse surfacique de 5m/h au moins et avec un rapport supérieur à 1.3 de la concentration en ammoniac à la concentration en dioxyde d'azote NO₂.

La demanderesse a cherché à réduire les oxydes d'azote contenus dans une large gamme de concentrations dans des effluents oxygénés en mettant en oeuvre des rapports plus faibles de concentrations NH₃/NOₓ en particulier des rapports de l'ordre de 1,1 et a proposé tout d'abord des compositions catalytiques à base de mordénite à taux abaissé en Na permettant d'obtenir d'excellents résultats de réduction par l'ammoniac des NOₓ dans des effluents oxygénés à des températures relativement élevées comprises entre 300 et 375° lorsque la mordénite est sous forme ammonium, entre 300 et 550° lorsqu'elle est sous forme acide. Puis elle s'est aperçue que ces températures de traitement des mêmes effluents pouvaient être encore considérablement abaissées en utilisant comme matière active une mordénite échangée au cuivre ; cette température est alors de l'ordre de 225 à 400°. L'ensemble de ces résultats figure dans la demande de brevet européen 0286507.

Le brevet US 4052337 décrit l'utilisation de différents catalyseurs de type zéolithe, en particulier de la zéolithe Y pour réduire les NOₓ en présence de NH₃. Ce catalyseur destiné à être utilisé à des températures relativement élevées pour réduire des oxydes d'azote contenant du soufre n'est efficace que s'il est préparé dans un procédé mettant en oeuvre un échange préalable des cations de la zéolithe par des ions alcalino-terreux suivi d'une imprégnation par des ions métalliques, en particulier cuivriques. On trouve de même décrite la simple juxtaposition de zéolithes Y et de composés de cuivre par S. Kasaoka (cité dans Chemical Abstracts, vol 91, 1979, n°128126s) et dans la demande européenne EP 0199169.

La demanderesse a maintenant découvert un système catalytique obtenu par réaction d'échange par des ions cuivriques à partir d'une zéolithe NaY sélectionnée en fonction de sa surface spécifique parfaitement efficace pour réduire les oxydes d'azote NOₓ par l'ammoniac à des températures encore abaissées par rapport à celle atteinte, avec les catalyseurs à base de mordénite échangée au cuivre décrits dans la demande de brevet EP 0286507, notamment entre 200 et 400 °C.

La zéolithe de base utilisée pour préparer les compositions catalytiques de la présente invention est une zéolithe NaY de surface spécifique comprise entre 750 et 950 m²/g. Cette zéolithe présente une structure plus ouverte que celle de la mordénite. plus ouverte que celle des mordénites prises en compte dans la demande EP 0286507 ou dans le brevet allemand DD 3802871. On y trouve les plus grosses cavités connues dans les structures de type zéolithe appelées supercages dont le diamètre est voisin de 13 Å ; ces cavités communiquent entre elles par des ouvertures dont le diamètre est de l'ordre de 8 à 9 Å et leur succession constitue les pores du réseau. La structure est cubique et les pores courent dans les 3 directions perpendiculaires de l'espace en se croisant au niveau des supercages.

La zéolithe de base NaY utilisée pour la préparation des catalyseurs de l'invention a un rapport atomique de charpente Si/Al compris entre 2 et 3.

Les analyses Si et Al sont effectuées par fluorescence X.

La surface spécifique est calculée selon la méthode BET à partir de l'isotherme d'adsorption désorption effectuée à la température de l'azote liquide après prétraitement à 500°C sous balayage d'azote sec.

Le paramètre de la maille cristalline est généralement compris entre 24,60. 10⁻¹⁰ m et 24,75 10⁻¹⁰ m. Il est calculé à partir du diagramme de diffraction X selon la méthode décrite dans la fiche ASTM D 3.942. 80.

La présente invention concerne un procédé de traitement des effluents oxygénés contenant des oxydes d'azote NOx par réduction par NH3 desdits NOx à l'aide de compositions catalytiques contenant comme matière active une zéolithe Y obtenue à partir d'une zéolite NaY NaY de surface spécifique comprise entre 750 à 950 m²/g et de préférence supérieure à 800 m²/g échangée par l'ion cuivrique. Par zéolithe échangée par l'ion cuivrique, on entend dans ce texte des produits obtenus par un premier échange par des ions NH₄⁺ suivi d'un échange par des ions Cu²⁺.Plus particulièrement la zéolithe Y sous forme échangée par le cuivre à l'état 2⁺ représente 70 à 90 % du poids total de ces nouvelles compositions catalytiques, le reste étant constitué par un liant et la teneur en cuivre par rapport au poids de zéolithe est avantageusement de 2 - à 12 %, de préférence de 5 à 11 %, ce qui représente un taux d'échange

Les compositions catalytiques qui sont le moyen de la présente invention sont préparées à partir de zéolithe Y par échange indirect des ions sodium de la zéolithe de base par des ions Cu ²⁺.

Lorsqu'on procède par un échange indirect à partir d'une zéolithe d'abord échangée à l'ammonium, on pratique cet échange de la façon suivante : la zéolithe Na Y est traitée par une solution de nitrate d'ammonium dans un réacteur agité. Le taux d'échange est limité par la thermodynamique et pour un système donné dépend donc de la concentration en nitrate d'ammonium, de la teneur en zéolithe Y de la suspension et de la température. On s'affranchit de la limite cinétique en maintenant un temps de réaction suffisant pour atteindre l'équilibre thermodynamique. En général dans le domaine de température utilisé compris entre 100 et 150 °C, le temps est fixé à 30 minutes. L'obtention de teneurs en sodium résiduelles faibles implique l'élimination du sodium extrait présent dans la solution. Ces opérations d'échanges sont renouvelées autant de fois que nécessaires en séparant la zéolithe Y partiellement échangée par filtration suivie de lavage à l'eau déminéralisée du gâteau de zéolithe. Les solutions de nitrate d'ammonium utilisées ont une concentration en NH₄ NO₃ comprise entre 400 et 850 g/l. La température de réaction étant comprise ente 100 et 150° et le rapport V/P du volume de solution au poids de solide à l'état sec est généralement voisin de 5. La teneur en sodium résiduel dépend du nombre d'opérations d'échange. Par exemple, après 3 cycles, avec une concentration en NH₄ NO₃ de 800 g/l et une température de 130 °C elle devient inférieure à 1 % alors qu'initialement elle était voisine de 9.5 %.

Le produit obtenu est séché à une température de l'ordre de 120 °C pendant une durée de 10 à 20 h puis soumis à une opération de malaxage avec un liant. Celui-ci est un élément du groupe constitué par l'argile kaolinite, la bentonite, l'alumine seule ou en combinaison. La composition catalytique obtenue est conditionnée sous une forme adaptée, telle que des pastilles ou de préférence des extrudés. On procède alors à un séchage pendant quelques heures à une température comprise entre 100 et 120 °C.

La surface spécifique mesurée selon la méthode BET est supérieure à 700 m²/g et le diamètre des macropores mesuré au porosimètre à mercure compris entre 100 et 10000 Å essentiellement.

Pour préparer les compositions catalytiques échangées au cuivre on part donc soit de la zéolithe Y sous forme sodique soit de la zéolithe échangée par NH₄⁺ décrite précédemment et utilisée soit sous forme de poudre soit mise en forme comme décrit précédemment.

Pour réaliser cet échange, il a été trouvé avantageux d'utiliser le cuivre sous sa forme complexée par l'ammoniac (Cu (NH₃)₄)²⁺ ; ce complexe étant obtenu à partir d'une solution aqueuse de nitrate de cuivre par ajout d'ammoniaque concentrée. La teneur en cuivre échangé est fonction des paramètres opératoires : concentration en (Cu (NH₃)₄)²⁺, température, teneur en zéolithe (V/P). Entre chaque échange le produit est lavé avec de l'eau déminéralisée. Généralement la concentration en complexe exprimé en cuivre est comprise entre 15 et 60 g/l et de préférence entre 20 et 30 g/l et la température entre 20 et 80 °C et de préférence 40 à 60 °. Lorsque l'échange par Cu⁺⁺ est réalisé sur de la poudre, après lavage celle-ci est d'abord séchée entre 80 et 100 °C puis mélangée avec un liant approprié et mise en forme. Lorsque l'échange intervient après une mise en forme, les produits préformés sont au préalable soumis à un traitement thermique en lit traversé sous fort courant d'air sec entre 300 et 500 °C en opérant par palier. La teneur en Cu⁺⁺ rapporté au poids de zéolithe est avantageusement comprise entre 3 et 12 % et de préférence entre 5 et 11 %, ce qui représente un taux d'échange vis à vis de ce cation compris entre 40 et 85 %. Après lavage, ces produits sont séchés sur plateaux à une température comprise entre 80 et 100 °C pendant 12 à 24 h.

Ces compositions catalytiques sont mises en oeuvre dans un réacteur à lit fixe traversé. Avant d'injecter le mélange réactionnel contenant les NOₓ et NH₃ on soumet ces produits à un traitement in situ sous fort débit d'air sec, au minimum de 1 à 2 Nm³ h⁻¹/l de catalyseur avec élévation progressive de la température de 50 à 100 °C/h jusqu'à une température comprise entre 350 et 450 °C en maintenant ce palier de température pendant 5 à 10 h.

Ces compositions catalytiques, sont applicables à l'épuration, en présence d'ammoniac, d'effluents gazeux oxygénés contenant des oxydes d'azote (NOₓ) à une température comprise entre 200 et 400 °C, sous une pression d'au moins 0,1 MPa absolu, avec une vitesse volumétrique horaire de circulation des gaz (VVH), qui peut être très élevée et atteindre 80.000 h⁻¹, et un rapport de la concentration en ammoniac à la concentration en oxydes d'azote NH₃/NOₓ au plus égal à 1,25.

On obtient des rendements exceptionnels dans ce type d'épuration, avec des rapports molaires NH₃/NOₓ compris entre 1,05 et 1,2 ; un rapport de 1,15 peut être avantageusement choisi.

L'influence de la pression est comparable à celle observée avec les catalyseurs à base de mordénite sous forme ammonium échangée ou non par Cu²⁺ et décrits dans le brevet européen EP 0286507. Une augmentation de pression est donc favorable. L'avantage des compositions catalytiques de la présente invention réside dans la conduite de l'opération d'épuration à basse température.

On obtient des résultats très satisfaisants à 220 °C.

Les compositions catalytiques échangées au cuivre permettent de combiner des rendements d'épuration très élevés supérieurs à 98 % avec des quantités d'ammoniac très proches de la stoechiométrie et surtout des teneurs en ammoniac résiduel, après réaction, très faibles, ce qui représente un avantage indéniable pour ce type de catalyseur.

Le procédé d'épuration mis en oeuvre sur les compositions catalytiques de l'invention convient particulièrement bien à la dépollution des gaz de queue rejetés à l'atmosphère dans la fabrication de l'acide nitrique.

Le procédé est extrêmement souple, adapté à l'épuration des effluents gazeux à toutes teneurs en oxydes d'azote. L'efficacité du procédé est remarquable même à des teneurs élevées en NOₓ de l'ordre de 20000 ppm et également aux faibles teneurs de l'ordre de 100 ppm en oxydes d'azote.

Ces compositions catalytiques sont des produits industriels résistants ne subissant aucune détérioration mécanique, ni perte d'activité après de très longues périodes de fonctionnement.

Les exemples qui suivent illustrent de façon non limitative la préparation de compositions catalytiques selon l'invention et leur mise en oeuvre. Toutes les quantités sont exprimées en parties en poids.

### EXEMPLE 1 : Préparation d'une zéolithe échangée avec NH₄⁺

On utilise 25 parties de Zéolithe NaY en poudre. Le rapport atomique Si/Al est de 2,6 et la teneur en sodium sur le produit sec de 9,7 %. La perte au feu à 1000 °C est de 18 %. La surface spécifique est de 830 m2/g et le paramètre cristallin de 24.63 Å.

Le diamètre moyen des particules est de 3 microns.

On procède à plusieurs échanges successifs des ions Na⁺ par des ions NH₄⁺ dans un réacteur fermé.

Cette zéolithe est mise en suspension dans une solution de nitrate d'ammonium contenant 800 g/l de NH₄ NO₃. Le point de consigne est fixé à 130 °C et le palier maintenu à ce niveau pendant 30 minutes.

La suspension est alors transférée sur un filtre. Le gâteau de zéolithe obtenu est lavé en percolation avec 120 parties d'eau déminéralisée à 80 °C.

L'échange est renouvelé plusieurs fois. A la fin de cette opération le produit est séché dans un courant d'air chaud.

La perte au feu (PAF) est alors de 25 %, la teneur en sodium résiduel sur le produit sec est de 0.8 % soit un taux d'échange de Na⁺ par NH₄⁺ de 92 %.

On mélange intimement dans un malaxeur 12 parties de cette zéolithe soit l'équivalent sec de 9 parties avec 2.7 parties d'argile kaolinite dont la PAF est de 17 %. Après ajustement de l'humidité, on soumet le mélange obtenu à l'extrusion au travers d'une filière. Les extrudés d'un diamètre de 3 mm sont alors séchés et calcinés à une température comprise entre 300 et 400°C pour augmenter leur résistance mécanique.

Ces extrudés dont la teneur en liant sur le produit sec est de 20 % servent de base à la préparation des catalyseurs décrits dans les exemples 2 et 3.

### EXEMPLE 2 : Préparation d'une zéolithe échangée au Cu à partir d'une zéolithe préalablement échangée à NH₄⁺

Les extrudés dont la préparation est décrite dans l'exemple 1, sont placés dans un panier en toile d'acier inoxydable.

On prépare une solution cupritétrammine en ajoutant une solution d'ammoniaque concentrée à un sel de nitrate de cuivre. Il se forme initialement un précipité d'hydroxyde de cuivre qui disparait dans un excès de solution ammoniacale. La solution, bleu limpide, est diluée par ajoût d'eau déminéralisée.

Le panier inox avec les extrudés est placé dans un récipient.

On verse la solution cuivrique jusqu'à ce que son niveau surnage celui des extrudés. L'ensemble est porté à 60 °C et la réaction d'échange est maintenue pendant 1 h.

Le panier est ensuite soulevé ; les extrudés sont lavés par trempage dans de l'eau déminéralisée et l'opération est renouvelée plusieurs fois avec la solution cuivrique fraîche. Le produit est alors lavé plusieurs fois par trempage puis séché. La perte au feu est de 22 %.

La teneur en cuivre des extrudés est de 8.5 % (sur produit sec) ce qui représente, compte tenu de la teneur en liant de 20 %, un taux d'échange des ions ammonium et /ou sodium résiduel par Cu²⁺ de 80 %.

### EXEMPLE 3 :

On renouvelle la préparation de l'exemple 2 en n'effectuant qu'un seul échange par la solution de cuivre tétrammine. La teneur en cuivre sur le produit sec est de 2.3 % ce qui correspond à un taux d'échange par Cu⁺⁺ de 22 %. La teneur en sodium résiduel est de 0.4 %.

### EXEMPLE 4 : Préparation d'une composition catalytique par échange direct de la zéolithe de départ

On utilise la zéolithe NaY ayant servi à la préparation des catalyseurs des exemples 1, 2, et 3.

Cette zéolithe est mise en forme selon les techniques de l'art antérieur avec 20 % de liant de type argile kaolinite. Les extrudés ont un diamètre de 1.8 mm.

Après séchage, ces extrudés sont calcinés puis soumis à un échange par une solution de cuivre tétrammine à une température de 60 °C pendant 2 h. Cette solution a été préparée à partir de 25 g de nitrate de cuivre Cu (NO₃)₂, 6H₂O mis en solution dans 100 cm3 d'eau déminéralisée et de 100 cm3 d'ammoniaque concentré.

Après lavage par trempage ces extrudés sont séchés.

La teneur en cuivre sur le produit sec (1000 °C) est de 7 % ce qui, compte tenu de la teneur en liant de 20 %, représente un taux d'échange du sodium par le cuivre de 67 % . La teneur en sodium résiduel est de 3 %.

### EXEMPLE 5 :

Cet exemple illustre la mise en oeuvre des catalyseurs, préparés selon les procédures décrites dans les exemples précédent, dans une unité de test catalytique en lit fixe,dans diverses conditions de fonctionnement, pour la réduction des oxydes d'azote par l'ammoniac en utilisant les gaz de queue d'une unité industrielle d'acide nitrique.

Le volume de catalyseur mis en oeuvre est de 37,5 cm3, celui-ci est porté à 350 °C sous un courant gazeux riche en azote de (96 % N₂ - 4 % O₂) de 750 Nl/h à raison d'une montée en température de 100 ° C/h. Le mélange (N₂ -O₂) est ensuite remplacé par l'effluent à traiter qui est mélangé avec une quantité d'ammoniac fonction de la teneur en oxyde d'azote.

Le procédé de réduction est conduit à une pression variant de 0,104 à 0,45 MPa absolus. La vitesse volumétrique horaire (VVH) exprime le débit de gaz entrant sur le catalyseur en Nl/h divisé par le volume de catalyseur. La teneur en NOₓ est exprimée en ppmv (partie par million par volume). Elle est de 1500 ppmv pour l'ensemble des tests effectués. La quantité d'ammoniac ajoutée au gaz entrant est exprimée par le rapport molaire NH₃/NOₓ qui est voisin de 1,16.

La teneur résiduelle d'ammoniac après la réaction est exprimée en ppmv. La température indiquée est la température moyenne du lit catalytique. Le rendement de la réduction exprimé en % correspond au rapport de la différence entre la teneur en NOₓ des gaz en entrée et la teneur en NOₓ des gaz en sortie, à la teneur en NOₓ des gaz en entrée.

Les résultats obtenus avec les catalyseurs obtenus dans les exemples de l'invention sont respectivement consignés dans les tableaux I et II pour l'exemple 2, III pour l'exemple 3, IV pour l'exemple 4.

**TABLEAU I**

| TEMPERATURE MOYENNE DU LIT (°C) | PRESSION ABSOLUE (MPa) | VVH (h⁻¹) | RENDEMENT EPURATION (%) | NH₃ SORTIE (ppmv) |
|---|---|---|---|---|
| 350 | 0,104 | 10000 | 99,2 | 0 |
| 350 | 0,104 | 20000 | 98,9 | 0 |
| 350 | 0,104 | 30000 | 98,7 | 0 |
| 250 | 0,104 | 10000 | 99,1 | 0 |
| 250 | 0,104 | 20000 | 96,3 | 0 |
| 250 | 0,104 | 30000 | 94,5 | 0 |
| 220 | 0,104 | 10000 | 98,9 | 0 |
| 220 | 0,104 | 20000 | 94,5 | 0 |
| 220 | 0,104 | 30000 | 85,4 | 0 |
| 200 | 0,104 | 10000 | 96,5 | 0 |
| 200 | 0,104 | 20000 | 91,8 | 0 |

**TABLEAU II**

| TEMPERATURE MOYENNE (°C) | PRESSION ABSOLUE (MPa) | VVH (h⁻¹) | RENDEMENT EPURATION (%) | NH₃ SORTIE (ppmv) |
|---|---|---|---|---|
| 250 | 0,3 | 20000 | 98,4 | 0 |
| 250 | 0,3 | 30000 | 98,3 | 0 |
| 250 | 0,3 | 40000 | 97,7 | 0 |
| 250 | 0,3 | 50000 | 96 | 0 |
| 200 | 0,3 | 10000 | 98,9 | 0 |
| 200 | 0,3 | 20000 | 97,8 | 0 |
| 200 | 0,3 | 30000 | 93,4 | 0 |

**TABLEAU III**

| TEMPERATURE MOYENNE (°C) | PRESSION ABSOLUE (MPa) | VVH (h⁻¹) | RENDEMENT EPURATION (%) | NH₃ SORTIE (ppmv) |
|---|---|---|---|---|
| 270 | 0,104 | 20000 | 99,8 | 0 |
| 270 | 0,104 | 30000 | 88,3 | 0 |
| 320 | 0,104 | 20000 | 98,7 | 0 |
| 320 | 0,104 | 30000 | 90 | 0 |
| 350 | 0,104 | 20000 | 92 | 0 |
| 350 | 0,104 | 30000 | 84,7 | 0 |

**TABLEAU IV**

| TEMPERATURE MOYENNE (°C) | PRESSION ABSOLUE (MPa) | VVH (h⁻¹) | RENDEMENT EPURATION (%) | NH₃ SORTIE (ppmv) |
|---|---|---|---|---|
| 220 | 0,104 | 10000 | 98 | 0 |
| 220 | 0,104 | 20000 | 94,8 | 0 |
| 250 | 0,104 | 10000 | 98,8 | 0 |
| 250 | 0,104 | 20000 | 97,6 | 0 |
| 300 | 0,104 | 10000 | 96,8 | 0 |
| 300 | 0,104 | 20000 | 96 | 0 |
| 220 | 0,45 | 20000 | 99 | 0 |
| 220 | 0,45 | 40000 | 97,4 | 0 |
| 300 | 0,45 | 20000 | 99,5 | 0 |
| 300 | 0,45 | 40000 | 96,5 | 0 |
| 300 | 0,45 | 60000 | 94 | 0 |

## Revendications

1. Procédé de traitement catalytique des effluents oxygénés contenant des NOx, contenant de l'ammoniac en quantité telle que le rapport NH3/NOx soit au plus égal à 1,25 à des températures comprises entre 200°C et 400°C, sous une pression d'au moins 0,1 MPa, avec une vitesse volumétrique pouvant atteindre 80.000 h⁻¹, caractérisé en ce que l'on utilise comme catalyseur des compositions à base de zéolites Y comprenant de 70 à 90% de zéolite NH4Y de rapport Si/Al compris entre 2 et 3 , de surface spécifique comprise entre 750 et 950 m²/g, échangée avec des ions cuivriques, la teneur en cuivre étant de 2 à 12% par rapport au poids de la zéolite, le reste étant constitué par un liant.

2. Procédé selon la revendication 1, caractérisé en ce que la zéolite NH4Y échangée par des ions cuivriques contient le complexe [Cu(NH₃)₄]²⁺.

3. Application du procédé selon l'une ou l'autre des revendications 1 ou 2 au traitement d'effluents oxygénés contenant des NOx et de l'ammoniac dans un rapport NH3/NOx compris entre 1,05 et 1,2

## Claims

1. Process for catalytic treatment of oxygenated effluents containing NOₓ, containing ammonia in a quantity such that the NH₃/NOₓ ratio is at most 1.25 at temperatures of between 200°C and 400°C, at a pressure of at least 0.1 MPa, with a space velocity capable of reaching 80,000 h⁻¹, characterized in that the catalyst employed is compositions based on zeolites Y including from 70 to 90 % of zeolite NH₄Y of Si/Al ratio of between 2 and 3, with a specific surface of between 750 and 950 m²/g, exchanged with cupric ions, the copper content being 2 to 12 % relative to the weight of the zeolite, the remainder consisting of a binder.

2. Process according to Claim 1, characterized in that the zeolite NH₄Y exchanged with cupric ions contains the complex [Cu(NH₃)₄]²⁺.

3. Application of the process according to either of Claims 1 and 2 to the treatment of oxygenated effluents containing NOₓ and ammonia in an NH₃/NOₓ ratio of between 1.05 and 1.2.

## Patentansprüche

1. Verfahren zur katalytischen Behandlung sauerstoffhaltiger Emissionen, die NOₓ enthalten, bei dem Ammoniak in einer solchen Menge verwendet wird, daß das NH₃/NOₓ-Verhältnis höchstens 1,25 beträgt bei Temperaturen zwischen 200 und 400 °C und einem Druck von mindestens 0,1 MPa bei einer Volumengeschwindigkeit bis zu 80.000 h⁻¹, dadurch gekennzeichnet, daß man als Katalysator Zusammensetzungen auf Basis von Zeolithen Y verwendet, die 70 bis 90 % des Zeoliths NH₄Y mit einem Si/Al-Verhältnis zwischen 2 und 3 enthalten, eine spezifische Oberfläche zwischen 750 und 950 m²/g besitzen und nach Austausch mit Kupfer(II)-Ionen einen Kupfergehalt von 2 bis 12 %, bezogen auf das Gewicht des Zeoliths, aufweisen, wobei der Rest ein Bindemittel ist.

2. Verfahren nach Anspruch 1, dadurch gekennzeichnet, daß der Zeolith NH₄Y nach Austausch mit Kupfer(II)-Ionen den Komplex [Cu(NH₃)₄]²⁺ enthält.

3. Anwendung des Verfahrens nach einem der Ansprüche 1 oder 2 zur Behandlung sauerstoffhaltiger Emissionen, die NOₓ und Ammoniak in einem NH₃/NOₓ-Verhältnis zwischen 1,05 und 1,2 enthalten.
